# EUROPEAN PATENT SPECIFICATION

(11) **EP 4 258 556 B1**
(45) Date of publication and mention of the grant of the patent: **26.02.2025**
(21) Application number: 21905323.8
(22) Date of filing: 28.10.2021
(51) Int. Cl.: H04B 1/00

(54) **RADIO FREQUENCY TRANSCEIVER SYSTEM AND COMMUNICATION DEVICE**
FUNKFREQUENZSENDEEMPFÄNGER UND KOMMUNIKATIONSVORRICHTUNG
SYSTÈME D'ÉMETTEUR/RÉCEPTEUR RADIOFRÉQUENCE ET DISPOSITIF DE COMMUNICATION

(30) Priority: 16.12.2020 CN 202011487404
(43) Date of publication of application: 11.10.2023
(73) Proprietor: GUANGDONG OPPO MOBILE TELECOMMUNICATIONS CORP., LTD., Dongguan, Guangdong 523860 (CN)
(72) Inventor: WANG, Guolong, Dongguan, Guangdong 523860 (CN)
(74) Representative: Ipside
(86) International application number: PCT/CN2021/126949
(87) International publication number: WO 2022/127394

(56) References cited:
- WO-A1-2020/192527
- CN-A- 108 199 728
- US-A1- 2019 288 716
- US-B2- 10 554 243

## Description

### TECHNICAL FIELD

The present disclosure relates to the field of radio frequency technology, in particular to a radio frequency transceiver system and a communication device.

### BACKGROUND

The statements herein only provide background information relevant to the present disclosure and do not necessarily constitute the exemplary prior art.

With the development and progress of technology, 5G mobile communication technology is gradually applied to electronic devices. A communication frequency of the 5G mobile communication technology is greater than that of 4G mobile communication technology. Generally, a plurality of front-end modules are arranged in a receiving channel of a radio frequency system to cooperate with an antenna array, so as to improve a channel capacity of the system. The cost is high, and a large area of substrate is occupied.

For example, CN108199728A discloses a multi-port selection switch, a radio frequency (RF) system, and a wireless communication device. The wireless communication device includes an antenna system and an RF circuit. The wireless communication device supports a dual-frequency single transmission path mode, and the antenna system includes four antennas. The multi-port selection switch includes five T-ports and four P-ports, with two of the T-ports being fully connected to the four P-ports as the first T-ports. The multi-port selection switch is used to connect the RF circuit and the antenna system to achieve the preset functions of the wireless communication device. The preset function is to support the transmission of the Sounding Reference Signal (SRS) through the probing reference signal SRS in the transmission antennas, and to send the 4-port SRS function. This embodiment supports the function of wireless communication devices in 5G NR to transmit the 4-port SRS through the probing reference signal SRS in the transmission antennas.

US10554243B2 discloses a multiway switch, a radio frequency system, and a wireless communication device. The multiway switch includes four throw (T) ports and four pole (P) ports, and the four T ports include one first T port coupled with all of the four P ports. The multiway switch is configured to be coupled with a radio frequency circuit and an antenna system of an electronic device operable in a dual-frequency single-transmit mode, to enable a preset function of the electronic device, the antenna system includes four antennas corresponding to the four P ports, and the preset function is a function of transmitting a sounding reference signal (SRS) through the four antennas in turn.

### SUMMARY

According to some embodiments of the present disclosure, a radio frequency transceiver system and a communication device are provided. The invention is set out in the appended set of claims.

Details of one or more embodiments of the present disclosure are set forth in the following figures and description. Other features, objects, and advantages of the present disclosure will become apparent from the description, figures and claims.

### BRIEF DESCRIPTION OF THE DRAWINGS

In order to explain the technical solutions of the embodiments of the present disclosure or the related art more clearly, the following will briefly introduce the figures required in the description of the embodiments or the related art. It is obvious that the figures in the following description are only some embodiments of the present disclosure. For those skilled in the art, other figures may be obtained from these figures without any creative work.
FIG. 1 is a first schematic structural view of a radio frequency transceiver system according to some embodiments of the present disclosure.
FIG. 2a is a first schematic view of a transmission application scenario of a communication device feeding back channel information according to some embodiments of the present disclosure.
FIG. 2b is a second schematic view of the transmission application scenario of the communication device feeding back channel information according to some embodiments of the present disclosure.
FIG. 3 is a schematic structural view of a mode of antennas alternately transmitting SRS according to some embodiments of the present disclosure.
FIG. 4 is a second schematic structural view of the radio frequency transceiver system according to some embodiments of the present disclosure.
FIG. 5 is a third schematic structural view of the radio frequency transceiver system according to some embodiments of the present disclosure.
FIG. 6 is a fourth schematic structural view of the radio frequency transceiver system according to some embodiments of the present disclosure.
FIG. 7 is a fifth schematic structural view of the radio frequency transceiver system according to some embodiments of the present disclosure.
FIG. 8 is a sixth schematic structural view of the radio frequency transceiver system according to some embodiments of the present disclosure.
FIG. 9 is a seventh schematic structural view of the radio frequency transceiver system according to some embodiments of the present disclosure.
FIG. 10 is an eighth schematic structural view of the radio frequency transceiver system according to some embodiments of the present disclosure.
FIG. 11 is schematic view of a packaging pin of a first radio frequency LFEM component in FIG. 6.

### DETAILED DESCRIPTIONs

In order to facilitate understanding of the present disclosure and make features and advantages of the present disclosure more obvious and understandable, some embodiments of the present disclosure are described in detail below in combination with the accompanying figures. Many details are set forth in the following description to facilitate full understanding of the present disclosure, and some embodiments of the present disclosure are shown in the accompanying figures. However, the present disclosure may be implemented in many different forms and is not limited to the embodiments described herein. On the contrary, the purpose of providing these embodiments is to make a more thorough and comprehensive understanding of contents disclosed in the present disclosure. The present disclosure may be implemented in many other modes different from those described herein. Those skilled in the art may make similar improvements without violating the connotation of the present disclosure. Therefore, the present disclosure is not limited by some embodiments disclosed below.

In addition, the terms "first" and "second" are only used for describing purposes and cannot be understood as indicating or implying relative importance or implying the number of technical features indicated. Therefore, the features defined with "first" and "second" may include at least one of these features explicitly or implicitly. In the description of the present disclosure, "a plurality of" means at least two, such as two, three, etc., unless otherwise specified. In the description of the present disclosure, "several" means at least one, such as one, two, etc., unless otherwise specified.

A radio frequency transceiver system related to some embodiments of the present disclosure may be applied to a communication device with a wireless communication function. The communication device may be a handheld device, an on-board device, a wearable device, a computing device, or other processing devices connected to a wireless modem, and various forms of user devices (UE) (for example, mobile phones), Mobile Stations (MS), etc. For convenience of description, the aforementioned devices are collectively referred to as communication devices. The network device may include a base station, an access point, etc.

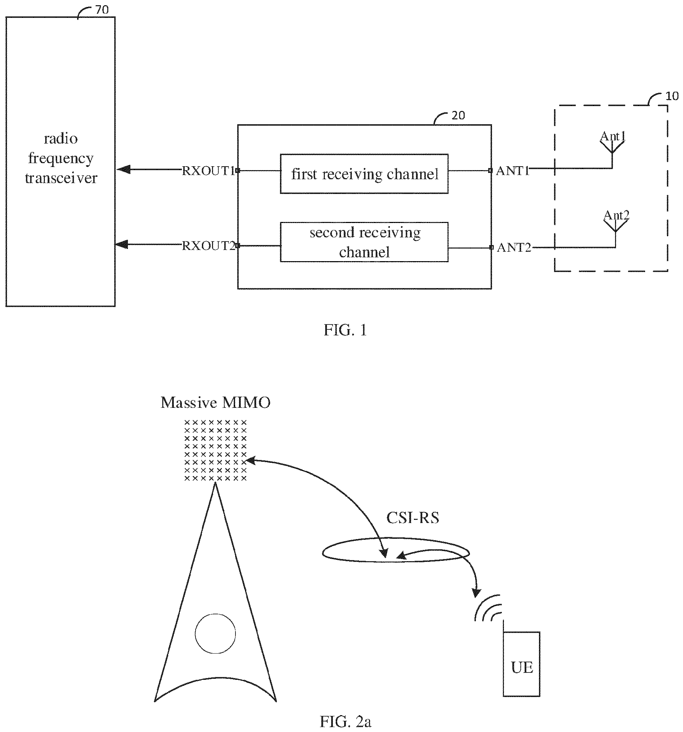

Some embodiments of the present disclosure provide a radio frequency transceiver system. As shown in FIG. 1, in some embodiments, the radio frequency transceiver system includes a radio frequency transceiver 70, an antenna group 10, and a first radio frequency Low-Noise Amplifier-Front-End Module (LFEM) component 20.

In some embodiments, the radio frequency transceiver 70 may include a transmitter (such as a transmitter TX) and a receiver (such as a receiver RX), or may include only a receiver (such as the receiver RX), or may include only a transmitter (such as the transmitter TX). The radio frequency transceiver 70 may be configured to achieve a frequency conversion between a radio frequency signal and a baseband signal, or/and, to achieve a frequency conversion between signals in different frequency bands, and so on.

The antenna group 10 at least includes a first antenna Ant1 and a second antenna Ant2. The first antenna Ant1 and the second antenna Ant2 may be configured to receive and transmit a radio frequency signal in any one of the frequency bands N41, N77, and N79. That is, both the first antenna Ant1 and the second antenna Ant2 are antennas capable of supporting 5G NR signals.

In some embodiments, each antenna in the antenna group 10 may be a directional antenna or a non-directional antenna. In some embodiments, each antenna in the antenna group 10 may be formed by using any suitable types of antennas. For example, each antenna in the antenna group 10 may be an antenna with a resonant element and formed by at least one of the following antenna structures: an array antenna structure, a ring antenna structure, a patch antenna structure, a slot antenna structure, a spiral antenna structure, a strip antenna, a monopole antenna, a dipole antenna, etc. Different types of antennas may be configured for frequency band combinations of different radio frequency signals.

The first radio frequency LFEM component 20 is configured to support dual channel reception (that is, a first receiving channel and a second receiving channel) of the radio frequency signal, and support a 2 * 2 MIMO function in cooperation with the first antenna Ant1 and the second antenna Ant2. The first radio frequency LFEM component 20 is configured with a first antenna port ANT1 configured to be connected to the first antenna Ant1, a second antenna port ANT2 configured to be connected to the second antenna Ant2, and a plurality of first receiving ports configured to be connected to the radio frequency transceiver 70, such as RXOUT1 and RXOUT2.

MIMO technology uses a plurality of transmitting and receiving antennas at the transmitting port and the receiving port respectively, so as to make full use of space resources, and realize multiple-input multiple-output by using the plurality of antennas without increasing spectrum resources and antenna transmitting powers, and a channel capacity of the system may be increased exponentially. The MIMO technology shows obvious advantages and is regarded as a core technology of a next-generation mobile communication.

A terminal and a base station may form 2 * 2 MIMO or 4 * 4 MIMO. When receiving performance is tested according to Thayer protocol, four receiving channels are connected to an instrument. The four channels form a downlink of the MIMO and receive all signals sent by the uplink base station, so as to improve the performance of the receiver.

The aforesaid radio frequency transceiver system realizes the dual channel reception of the radio frequency signal by using the first radio frequency LFEM component 20, and integrates two receiving channels in the same chip. For example, compared with a traditional radio frequency system that can support the 2 * 2 MIMO function, the area of the substrate occupied by each component may be saved, physical spaces may be vacated for performance optimization of other modules, and the cost may be reduced. The first radio frequency LFEM component 20 may realize the 2 * 2 MIMO function in cooperation with the first antenna and the second antenna, so as to improve the channel capacity of the system.

The radio frequency transceiver system in some embodiments of the present disclosure may support a fifth-generation mobile communication technology (referred to as 5G or 5G technology). The 5G is the latest generation of cellular mobile communication technology, which is also an extension of 4G, 3G, and 2G systems. The performance goal of the 5G is to achieve a high data rate, reduce latency, save energy, reduce the cost, improve the capacity of system, and connect to large-scale devices. The 5G includes two modes: Standalone Access (SA) and Non Standalone Access (NSA). The NSA is configured to anchor a 5G control signaling on a 4G base station, while the SA is configured to directly connect a 5G base station to a 5G core network, and the control signaling does not rely on a 4G network.

The 5G network supports a beamforming technology and may transmit to the communication device in a directional manner. When the base station wants to conduct a directional transmission, the base station may firstly detect the location of the communication device, the quality of the transmitting channel, etc., in this way, resources of the base station may be allocated to each communication device more accurately.

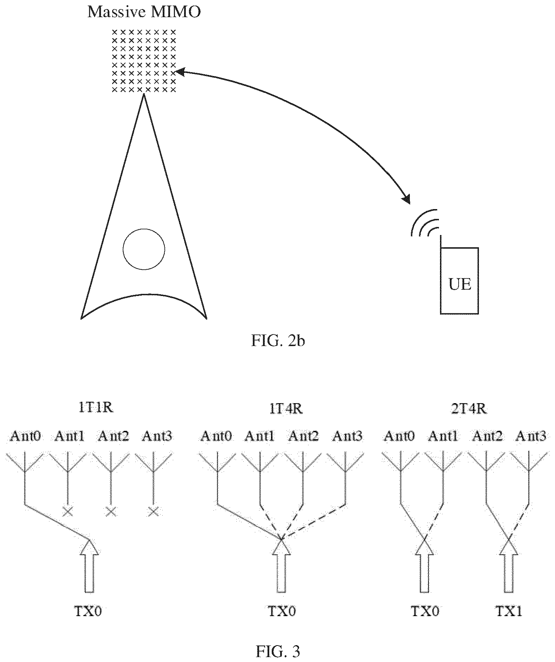

Currently, the communication device feeds back channel information in two different modes: Precoding Matrix Indicator (PMI) and Sounding Reference Signal (SRS), and signal transmission modes of which are shown in FIG. 2a and 2b respectively. From a standard definition perspective, the PMI is a function that all 5G communication devices must support, while the SRS is an optional function. In the PMI, the base station uses a predetermined mechanism, in which the terminal estimates channel information and resource requirements by measurement and in cooperation with various quantization algorithms, and reports the channel information and the resource requirements to the base station. In the SRS, channel reciprocity is used to allow the terminal to directly report the channel information to the base station. Obviously, the latter is more accurate.

The communication device sending SRS information is a mode for the base station to detect the position of the terminal and the quality of the channel. As shown in FIG. 3, the antennas transmit SRS alternately, and details are as follows.

In a first case, 1T1R: the first antenna is fixed to feed back information to the base station, transmitting SRS alternately is not supported.

In a second case, 1T4R: the first antenna, the second antenna, the third antenna, and the fourth antenna alternately transmit or send the SRS information. Only one antenna is selected for transmitting every time. Currently, the NSA uses this mode.

In a third case, 2T4R: the first antenna, the second antenna, the third antenna, and the fourth antenna alternately transmit or send the SRS information. Two antennas are selected for transmitting simultaneously every time. Currently, the SA uses this mode.

In the SRS mode, the more antennas that can participate in transmitting the reference signal, the more accurate the channel estimation, and a higher rate may be obtained. When using the same number of antennas for transmitting the SRS information, the SA mode may complete the channel estimation more quickly than the NSA mode, so as to improve the speed of the network channel estimation.

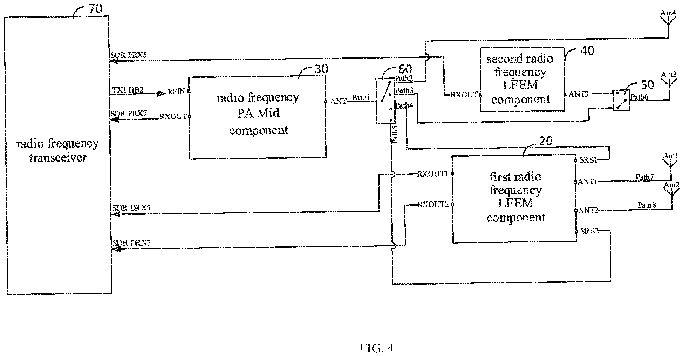

As shown in FIG. 4, in some embodiments, the radio frequency transceiver system further includes a radio frequency PA Mid (Power Amplifier Modules including Duplexers) component 30, a second radio frequency LFEM component 40, a first switching unit 50, and a multi-channel selecting switch 60. The antenna group 10 also includes a third antenna and a fourth antenna. The first radio frequency LFEM component 20 is further configured with a first alternate transmitting port and a second alternate transmitting port. In some embodiments of the present disclosure, the first radio frequency LFEM component 20 may be understood as a Low Noise Amplifier-Front End Module, which may realize the dual channel reception and transmission of the radio frequency signal of a single frequency band.

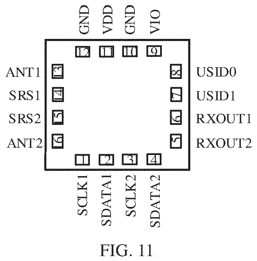

In some embodiments, as shown in FIG. 11, the first radio frequency LFEM component 20 may be understood as a packaging chip. The first antenna port ANT1, the second antenna port ANT2, the first alternate transmitting port SRS1, the second alternate transmitting port SRS2, and the receiving port RXOUT configured in the first radio frequency LFEM component 20 may be understood as radio frequency pins of the first radio frequency LFEM component 20, which are configured to be connected to various external components. In some embodiments, the receiving port RXOUT may be configured to be connected to the radio frequency transceiver 70. The first alternate transmitting port SRS1 and the second alternate transmitting port SRS2 may be configured to be connected to the multi-channel selecting switch 60. The first antenna port ANT1 may be configured to be connected to the first antenna Ant1 The second antenna port ANT2 may be configured to be connected to the second antenna Ant2. In some embodiments, the first antenna port ANT1 may be configured to input the radio frequency signal received by the first antenna Ant1 to the first radio frequency LFEM component 20, and may be configured to transmit the radio frequency signal processed by the first radio frequency LFEM component 20 out through the first antenna Ant1 The second antenna port ANT2 may be configured to input the radio frequency signal received by the second antenna Ant2 to the first radio frequency LFEM component 20, and may be configured to transmit the radio frequency signal processed by the first radio frequency LFEM component 20 out through the second antenna Ant2. The receiving port RXOUT may be configured to output the radio frequency signal, which is received by the first radio frequency LFEM component 20 through the first antenna port ANT1 and the second antenna port ANT2 and processed by the first radio frequency LFEM component 20, to the radio frequency transceiver 70 to achieve a receiving control of the radio frequency signal. The first alternate transmitting port SRS1 and the second alternate transmitting port SRS2 may be configured to receive the radio frequency signal output by the radio frequency transceiver 70 to the radio frequency PA Mid component 30 and processed by the radio frequency PA Mid component 30, in this way, the first radio frequency LFEM component 20 may realize transmission of the received radio frequency signal.

The radio frequency signal may be a 5G signal, such as a 5G signal in the frequency band N41, a radio frequency signal in the frequency band N77 (N78), a radio frequency signal in the frequency band N79, etc. In some embodiments, the operating frequency band of N41 is 496MHz-2690MHz, the operating frequency band of N77 is 3.3GHz-4.2GHz, the operating frequency band of N78 is 3.3GHz-3.8GHz, and the operating frequency band of N79 is 4.4GHz-5.0GHz. It should be noted that, the operating frequency band of N77 covers the operating frequency band of N78. That is, when the radio frequency LFEM component can support the transmission and reception of the radio frequency signal in the frequency band N77, the radio frequency LFEM component may also support the transmission and reception of the radio frequency signal in the frequency band N78.

The radio frequency Power Amplifier Modules including Duplexers (PA Mid) component 30 is configured to support an amplification and a transceiving control of the radio frequency signal, that is, the radio frequency PA Mid component 30 is configured to control the reception and transmission of a single radio frequency signal. In some embodiments, the radio frequency PA Mid component 30 may also be a packaging chip, which is configured with a receiving channel for receiving the radio frequency signal and a transmitting channel for transmitting the radio frequency signal, so as to realize the transceiving control of the radio frequency signal.

In some embodiments of the present disclosure, the second radio frequency LFEM component 40 may be understood as a Low Noise Amplifier-Front-End Module, which may realize the receiving control of the radio frequency signal of a single frequency band. The second radio frequency LFEM component 40 is configured with a third antenna port ANT3. The second radio frequency LFEM component 40 is further configured with a second receiving port RXOUT. In some embodiments, the second radio frequency LFEM component 40 may be understood as a packaging chip, and the third antenna port ANT3 and the receiving port RXOUT configured in the second radio frequency LFEM component 40 may be understood as radio frequency pins of the second radio frequency LFEM component 40, which are configured to be connected to various external devices. In some embodiments, the receiving port RXOUT may be configured to be connected to the radio frequency transceiver 70. The third antenna port ANT3 may be configured to be connected to the third antenna Ant3. For example, the third antenna port ANT3 may be configured input the radio frequency signal received by the third antenna Ant3 to the second radio frequency LFEM component 40.

The first switching unit 50 includes two first ends and a second end. One of the two first ends is connected to the second radio frequency LFEM component 40, and the other of the two first ends is connected to the radio frequency PA Mid component 30 through the multi-channel selecting switch 60. The first switching unit 50 is configured to switch on the channel connecting the third antenna Ant3 and the second radio frequency LFEM component 40 or the channel connecting the third antenna Ant3 and the radio frequency PA Mid component 30, so as to realize the receiving control and transmitting control of the radio frequency signal received by the third antenna Ant3.

The multi-channel selecting switch 60 includes a first end and a plurality of second ends. The first end is connected to the radio frequency PA Mid component 30. The plurality of second ends are respectively connected to the fourth antenna Ant4, the first alternate transmitting port SRS1, the second alternate transmitting port SRS2, and the other of the two first ends of the first switching unit 50 in one-to-one correspondence, to selectively conduct or switch on radio frequency channels between the radio frequency PA Mid component and the first antenna Ant1, between the radio frequency PA Mid component and the second antenna Ant2, between the radio frequency PA Mid component and the third antenna Ant3, and between the radio frequency PA Mid component and the fourth antenna Ant4, thereby supporting the SRS function and the 4 * 4 MIMO function.

It should be noted that, the number of the second ends of the multi-channel selecting switch 60 may be set according to the number of the antennas included in the antenna group 10. In some embodiments, when the number of the antennas in the antenna group 10 is four, the number of the second ends of the multi-channel selecting switch 60 is also four. In some embodiments, the multi-channel selecting switch 60 may be a radio frequency SP4T switch.

In the radio frequency transceiver system in aforesaid embodiments, based on the first alternate transmitting port SRS1 and the second alternate transmitting port SRS2 configured in the first radio frequency LFEM component 20, and in cooperation with the multi-channel selecting switch 60 and the first switching unit 50, the first antenna Ant1, the second antenna Ant2, the third antenna Ant3, and the fourth antenna Ant4 may alternately transmit radio frequency signals, and the alternate transmitting modes of 1T4R and 2T4R may be supported. A four-channel reception of four radio frequency signals received by the first antenna Ant1, the second antenna Ant2, the third antenna Ant3, and the fourth antenna Ant4 may also be achieved based on the dual receiving channel of the first radio frequency LFEM component 20, the receiving channel of the second radio frequency LFEM component 40, and the receiving channel of the radio frequency PA Mid component 30. Furthermore, in the radio frequency transceiver system provided by some embodiments of the present disclosure, based on the two alternate transmitting ports of the first radio frequency LFEM component 20, the second radio frequency LFEM component 40, the radio frequency PA Mid component 30, the first switching unit 50, and the multi-channel selecting switch 60 arranged in a package the first antenna Ant1, the second antenna Ant2, the third antenna Ant3, and the fourth antenna Ant4 may alternately transmit the radio frequency signals in case that the number of switches independently cascaded is reduced. In this way, the cost may be reduced, and the area of the substrate occupied by various components in the radio frequency transceiver system may be reduced.

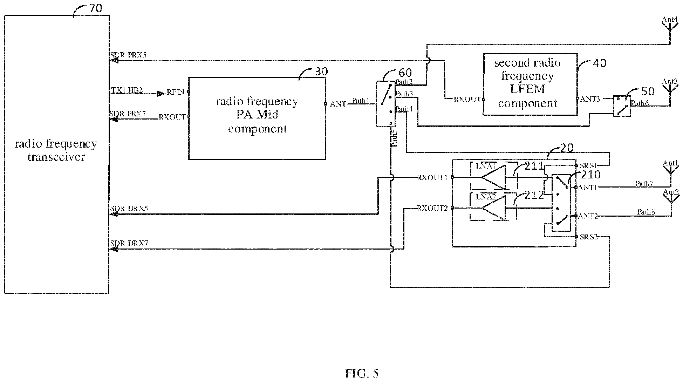

As shown in FIG. 5, in some embodiments, the first radio frequency LFEM component 20 includes a second switching unit 210, a first receiving circuit 211, and a second receiving circuit 212. The second switching unit 210 includes a plurality of first ends and a plurality of second ends. Two of the first ends of the second switching unit 210 are respectively connected to the first alternate transmitting port SRS1 and the second alternate transmitting port SRS2. The plurality of second ends of the second switching unit 210 are respectively connected to the first antenna port ANT1 and the second antenna port ANT2 in one-to-one correspondence. The second switching unit 210 is configured to receive and transmit the radio frequency signal through the first antenna port ANT1 and the second antenna port ANT2, and further transmit the radio frequency signal transmitted by the radio frequency transceiver 70 through the first alternate transmitting port SRS 1 and the second alternate transmitting port SRS2, so as to selectively conduct or switch on the connection between the first antenna port ANT1 and the receiving channel of the first radio frequency LFEM component 20 and the connection between the second antenna port ANT2 and the receiving channel of the first radio frequency LFEM component 20, or selectively conduct or switch on the connection between the first antenna port ANT1 and the transmitting channel of the first radio frequency LFEM component 20, and between the second antenna port ANT2 and the transmitting channel of the first radio frequency LFEM component 20. The receiving channel of the first radio frequency LFEM component 20 may be understood as including the first receiving channel between the first antenna port ANT1 and the first receiving port RXOUT1 and the second receiving channel between the second antenna port ANT2 and the first receiving port RXOUT2. The transmitting channel of the first radio frequency LFEM component 20 may be understood as including the first transmitting channel between the first antenna port ANT1 and the first alternate transmitting port SRS1 and the second transmitting channel between the second antenna port ANT2 and the second alternate transmitting port SRS2.

The first receiving circuit 211 includes a first low noise amplifier LNA1. An input end of the first low noise amplifier LNA1 is connected to another of the first ends of the second switching unit 210, and an output end of the first low noise amplifier LNA1 is connected to one of the first receiving ports (RXOUT1). The first low noise amplifier LNA1 is configured to amplify the radio frequency signal received by the first receiving channel through the first antenna port ANT1.

The second receiving circuit 212 includes a second low noise amplifier LNA2. An input end of the second low noise amplifier LNA2 is connected to an additional one of the first ends of the second switching unit 210, and an output end of the second low noise amplifier LNA2 is connected to another of the first receiving ports (RXOUT2). The second low noise amplifier LNA2 is configured to amplify the radio frequency signal received by the second receiving channel through the second antenna port ANT2.

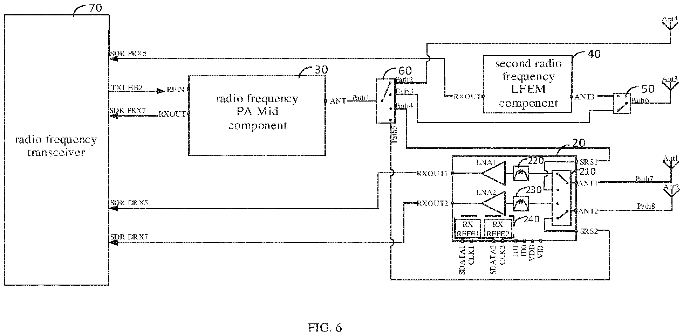

As shown in FIG. 6, in some embodiments, the first receiving circuit 211 further includes a first filtering unit 220, and the second receiving circuit 212 further includes a second filtering unit 230. The first filtering unit 220 and the second filtering unit 230 may be respectively arranged in the first receiving channel and the second receiving channel to filter the received radio frequency signal. The first filtering unit 220 is arranged in the first receiving channel, which may be understood as that, in the first receiving channel, the first filtering unit 220 is arranged at the front end of the second switching unit 210, that is, the first filtering unit 220 is arranged between the input end of the first low noise amplifier LNA1 and the second switching unit 210. Similarly, the second filtering unit 230 is arranged in the second receiving channel, which may be understood as that, in the second receiving channel, the second filtering unit 230 is arranged at the front end of the second switching unit 210, that is, the second filtering unit 230 is arranged between the input end of the second low noise amplifier LNA2 and the second switching unit 210.

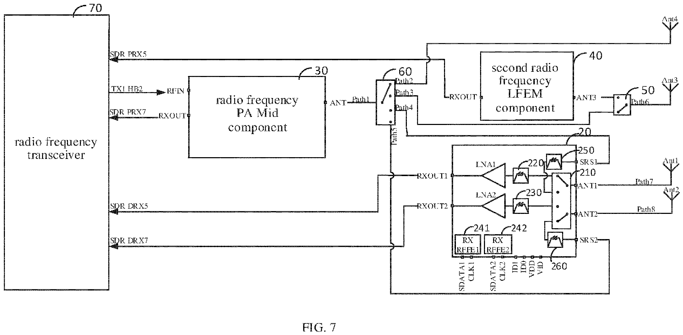

As shown in FIG. 7, in some embodiments, the first radio frequency LFEM component 20 further includes a third filtering unit 250 and a fourth filtering unit 260. The third filtering unit 250 and the fourth filtering unit 260 are respectively arranged in the first transmitting channel and the second transmitting channel to filter the received radio frequency signal. The third filtering unit 250 is arranged in the first transmitting channel, which may be understood as that, the third filtering unit 250 is arranged at the front end of the second switching unit 210, that is, the third filtering unit 250 is arranged between the second switching unit 210 and the first alternate transmitting port SRS1. The fourth filtering unit 260 is arranged in the second transmitting channel, which may be understood as that, the fourth filtering unit 260 is arranged at the front end of the second switching unit 210, that is, the fourth filtering unit 260 is arranged between the second switching unit 210 and the second alternate transmitting port SRS2.

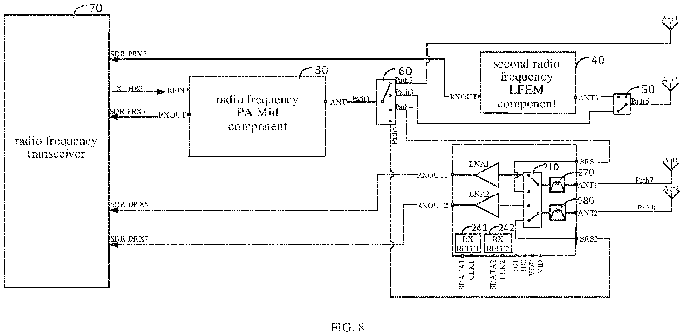

As shown in FIG. 8, in some embodiments, the first radio frequency LFEM component 20 further includes a fifth filtering unit 270 and a sixth filtering unit 280. The fifth filtering unit 270 is arranged at the back end of the second switching unit 210, that is, the fifth filtering unit 270 is arranged between the second switching unit 210 and the first antenna port ANT1. The sixth filtering unit 280 is arranged at the back end of the second switching unit 210, that is, the sixth filtering unit 280 is arranged between the second switching unit 210 and the second antenna port ANT2.

3GPP protocol has clear requirements for stray radiation of transmission, and filters may be used to filter out out-of-band stray. In some embodiments of the present disclosure, compared with the first radio frequency LFEM component 20 shown in FIG. 6, the fifth filtering unit 270 is arranged between the second switching unit 210 and the first antenna port ANT1, and the sixth filtering unit 280 is arranged between the second switching unit 210 and the second antenna port ANT2. On the premise of ensuring that the receiving channel only allows the radio frequency signal of a preset frequency band to pass through, that the transmitting channel only allows the radio frequency signal of the preset frequency band to pass through is also taken into account. In addition, stray waves other than the preset frequency band may be filtered out.

In some embodiments, each filtering unit (i.e., the first filtering unit 220, the second filtering unit 230, the third filtering unit 250, the fourth filtering unit 260, the fifth filtering unit 270, or the sixth filtering unit 280) includes a band-pass filter or a low-pass filter. It should be noted that, the type of filter in each filter unit may be selected according to the operating frequency band of the radio frequency signal that the first radio frequency LFEM component 20 can support. In some embodiments, when the radio frequency signal supported by the first radio frequency LFEM component 20 is a 5G signal in the frequency band N41, the filter used by the first radio frequency LFEM component 20 may be a low-pass filter that only allows the radio frequency signal in the frequency band N41 to pass through and that further filters stray waves other than the frequency band N41. When the radio frequency signal supported by the first radio frequency LFEM component 20 is a 5G signal in the frequency band N77, the filter used by the first radio frequency LFEM component 20 may be a band-pass filter that only allows the radio frequency signal in the frequency band N77 to pass through and that further filters stray waves other than the frequency band N77. When the radio frequency signal supported by the first radio frequency LFEM component 20 is a 5G signal in the frequency band N79, the filter used by the first radio frequency LFEM component 20 may be a band-pass filter that only allows the radio frequency signal in the frequency band N79 to pass through and that further filters stray waves other than the frequency band N79.

As shown in FIGS. 6-8, in some embodiments, the first radio frequency LFEM component 20 also includes a control module 240 respectively connected to the first receiving circuit 211, the second receiving circuit 212, and the second switching unit 210. The control module 240 is configured to adjust gain coefficients of the first low noise amplifier LNA1 and the second low noise amplifier LNA2 to reduce link loss of the receiving channel. The control module 240 is further configured to control the second switching unit 210 to selectively conduct or switch on any two of channels in which the first alternate transmitting port SRS1, the second alternate transmitting port SRS2, the first receiving circuit 211, and the second receiving circuit 212 are located. In this way, the any two of channels may execute at least one of transmission and reception of the radio frequency signal simultaneously.

In some embodiments, the control module 240 includes a first control unit 241 and a second control unit 242. The first control unit 241 may be configured to control the second switching unit 210 to switch on the first transmitting channel and the first receiving channel. The second control unit 242 may be configured to control the second switching unit 210 to switch on the second transmitting channel and the second receiving channel.

In some embodiments, each of the first control unit 241 and the second control unit 242 may be a Mobile Industry Processor Interface (MIPI) - radio frequency Front End Control Interface (RFFE) control unit or a radio frequency Front End Control Interface (RFFE) control unit, which complies with control protocol of the RFFE bus. When the control module 240 is a MIPI-RFFE control unit or a RFFE control unit, the radio frequency L-PA Mid component is further configured with an input pin CLK for clock signals, an input pin or a bidirectional pin SDATAS for unidirectional/bidirectional data signals, an input pin VDD for power supply, an input pin VIO for reference voltage, and so on.

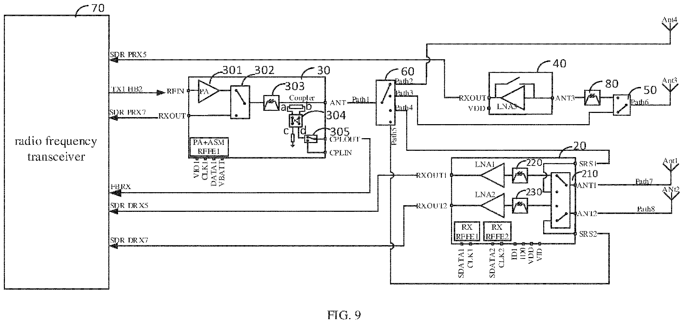

As shown in FIG. 9, in some embodiments, the radio frequency PA Mid component 30 is configured with a radio frequency transmitting port RFIN, a radio frequency receiving port RXOUT, and a radio frequency antenna port ANT. The radio frequency PA Mid component 30 may be understood as a packaging chip, and the radio frequency transmitting port RFIN, the radio frequency receiving port RXOUT, and the radio frequency antenna port ANT configured in the radio frequency PA Mid component 30 may be understood as the radio frequency pins of the radio frequency PA Mid component 30, which are configured to be connected to various external devices. In some embodiments, the radio frequency transmitting port RFIN and the radio frequency receiving port RXOUT may be configured to be connected to the radio frequency transceiver 70. The radio frequency antenna port ANT may be configured to be connected to the first end of the multi-channel selecting switch 60, and selectively conduct or switch on the channel between the radio frequency antenna port ANT and the first antenna Ant1, the channel between the radio frequency antenna port ANT and the second antenna Ant2, the channel between the radio frequency antenna port ANT and the third antenna Ant3, or the channel between the radio frequency antenna port ANT and the fourth antenna Ant4 through the multi-channel selecting switch 60.

In some embodiments, the radio frequency PA Mid component 30 includes a power amplifier 301, a ninth filtering unit 303, and a third switching unit 302. An input end of the power amplifier 301 is connected to the radio frequency transmitting port RFIN to receive the radio frequency signal transmitted by the radio frequency transceiver 70 and amplify the power of the received radio frequency signal. The ninth filtering unit 303 is connected to the radio frequency antenna port ANT to filter the received radio frequency signal. The third switching unit 302 is respectively connected to an output end of the power amplifier 301, the radio frequency receiving port RXOUT, and the ninth filtering unit 303, to selectively conduct or switch on the receiving channel in which the radio frequency receiving port RXOUT is located and the transmitting channel in which the radio frequency transmitting port RFIN is located.

As shown in FIG. 9, in some embodiments, the radio frequency PA Mid component 30 is configured with a coupling output port CPLOUT, and the radio frequency PA Mid component 30 further includes a coupling unit 304 and a coupling switch 305. The coupling unit 304 is configured to couple the radio frequency signals in the transmitting channel to achieve a coupling output of the radio frequency signals, so as to measure a coupling power of the radio frequency signals. In some embodiments, the coupling unit 304 includes an input end a, an output end b, a first coupling end c, and a second coupling end d. The coupling unit 304 further includes a main line extending between the input end a and the output end b, and a secondary line extending between the first coupling end c and the second coupling end d. The input end a of the coupling unit 304 is connected to the ninth filtering unit 303, and the output end b of the coupling unit 304 is connected to the radio frequency antenna port ANT. The first coupling end c is configured to couple the radio frequency signals received by the input end a and output a forward coupling signal. The second coupling end d is configured to couple reflected signals of the radio frequency signals received by the output end b and output a reverse coupling signal. Based on the forward coupling signal output by the first coupling end c, forward power information of the radio frequency signals may be detected correspondingly. Based on the reverse coupling signal output by the second coupling end d, reverse power information of the radio frequency signals may be detected correspondingly, and the detecting mode may be defined as a reverse power-detecting mode.

The coupling switch 305 is respectively connected to the first coupling end c, the second coupling end d, and the coupling output port CPLOUT, to selectively conduct or switch on a first coupling channel between the first coupling end c and the coupling output port CPLOUT to detect the forward power of the radio frequency signals, which is defined as the forward power-detecting mode, or, conduct or switch on the second coupling channel between the second coupling end d and the coupling output port CPLOUT to detect the reverse power of the radio frequency signals, which is defined as the reverse power-detecting mode. That is, the coupling switch 305 is configured to switch between the forward power-detecting mode and the reverse power-detecting mode. In some embodiments, the coupling unit 304 may include two directional couplers in reverse series.

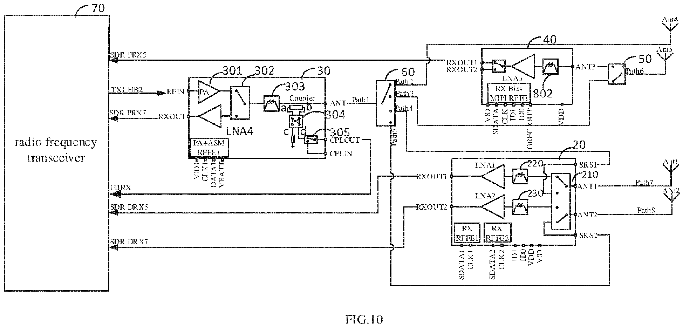

As shown in FIG. 10, in some embodiments, the radio frequency PA Mid component 30 also includes a fourth low noise amplifier LNA4. An input end of the fourth low noise amplifier LNA4 is connected to the third switching unit 302, and an output end of the fourth low noise amplifier LNA4 is connected to the radio frequency receiving port RXOUT, and the fourth low noise amplifier LNA4 is configured to amplify the radio frequency signal in the receiving channel.

As shown in FIG. 9, in some embodiments, the second radio frequency LFEM component 40 includes a third low noise amplifier LNA3 configured to amplify the received radio frequency signal. An input end of the third low noise amplifier LNA3 is connected to the third antenna port ANT3. As shown in FIG. 9, in some embodiments, the radio frequency transceiver system further includes a seventh filtering unit 80. The seventh filtering unit 80 is respectively connected to one of the first ends of first switching unit 50 and the third antenna end ANT and configured to filter the received radio frequency signal. In some embodiments, the seventh filtering unit 80 may include a band-pass filter or a low-pass filter, which may be selected according to the working frequency band of the radio frequency signal that can be supported by the radio frequency transceiver system. In some embodiments, when the radio frequency signal supported by the radio frequency transceiver system is a 5G signal in the frequency band N41, the seventh filtering unit 8 may be a band-pass filter that only allows the radio frequency signal in the frequency band N41 to pass through and that filters stray waves other than the frequency band N41, so as to filter interference signals other than the useful signal frequency band entered via the antenna, thereby reducing a possibility of out-of-band blocking of the receiving link due to out-of-band interference signals.

As shown in FIG. 10, in some embodiments, the second radio frequency LFEM component 40 also includes an eighth filtering unit 802. The eighth filtering unit 802 is respectively connected to the input end of the third low noise amplifier LNA3 and the third antenna port ANT3 and configured to filter the received radio frequency signal. The eighth filtering unit 802 may include a band-pass filter or a low-pass filter, which may be selected according to the working frequency band of the radio frequency signal that may be supported by the second radio frequency LFEM component 40. In some embodiments, when the radio frequency signal supported by the second radio frequency LFEM component 40 is a 5G signal in the frequency band N41, the eighth filtering unit 802 may be a low-pass filter that only allows the radio frequency signal in the frequency band N41 to pass through and that further filters stray waves other than the frequency band N41. When the radio frequency signal supported by the second radio frequency LFEM component 40 is a 5G signal in the frequency band N77, the eighth filtering unit 802 may be a band-pass filter that only allows the radio frequency signal in the frequency band N77 to pass through and that further filters stray waves other than the frequency band N77. When the radio frequency signal supported by the second radio frequency LFEM component 40 is a 5G signal in the frequency band N79, the eighth filtering unit 802 may be a band-pass filter that only allows the radio frequency signal in the frequency band N79 to pass through and that further filters stray waves other than the frequency band N79.

The radio frequency transceiver system based on some embodiments of the present disclosure may support the SRS function of the four antenna 1T4R. FIG. 9 is taken as an example to analyze a working principle of the SRS in the frequency band N41.

The radio frequency signal is output from the radio frequency antenna port ANT of the radio frequency PA Mid component 30 through the radio frequency transmitting port RFIN, the power amplifier 301, the third switching unit 302, the ninth filtering unit 303, and the coupling unit 304 of the radio frequency PA Mid component 30, and is transmitted to the multi-channel selecting switch 60 (such as the radio frequency SP4T switch) through path1. The multi-channel selecting switch 60 is switched to path2. The radio frequency signal is output from the fourth antenna Ant4.

The radio frequency signal is transmitted to the multi-channel selecting switch 60 through the path 1. The multi-channel selecting switch 60 is switched to path 3. The radio frequency signal is transmitted to the first switching unit 50 (such as a radio frequency SPDT switch). The first switching unit 50 is switched to path 6. The radio frequency signal is output from the third antenna Ant3.

The radio frequency signal is transmitted to the multi-channel selecting switch 60 through the path 1. The multi-channel selecting switch 60 is switched to path 4. The radio frequency signal is transmitted to the second switching unit 210 (such as the radio frequency DP4T switch) through the alternate transmitting port SRS1 of the first radio frequency LFEM component 20. The second switching unit 210 is switched to path 7. The radio frequency signal is output from the first antenna Ant1

The radio frequency signal is transmitted to the multi-channel selecting switch 60 through the path 1. The multi-channel selecting switch 60 is switched to path 5. The radio frequency signal is transmitted to the second switching unit 210 through the second alternate transmitting port SRS2 of the first radio frequency LFEM component 20. The second switching unit 210 is switched to path 8. The radio frequency signal is output from the second antenna Ant2.

The SRS functions of transmission in N77 and N79 are similar to those in N41, which will not be repeated herein. The SRS path configuration is shown in Table 1.

**Table 1 SRS Detailed Path Configuration Table**

| | N41 | N77 | N79 |
|---|---|---|---|
| Channel0 | Path1->Path2 | Path1->Path2 | Path1->Path2 |
| Channel1 | Path1->Path3->Path6 | Path1->Path3->Path6 | Path1->Path3->Path6 |
| Channel2 | Path1->Path4->Path7 | Path1->Path4->Path7 | Path1->Path4->Path7 |
| Channel3 | Path1->Path5->Path8 | Path1->Path5->Path8 | Path1->Path5->Path8 |

In Table 1, Channel 0, Channel 1, Channel 2, and Channel 3 are transmitting channels for the antennas to transmit alternately.

The radio frequency transceiver system in the aforesaid embodiments may support the SRS function of 1T4R. For the radio frequency transceiver system, based on the first radio frequency LFEM component 20, the second radio frequency LFEM component 40, the radio frequency PA Mid component 30, the first switching unit 50, and the multi-channel selecting switch 60 arranged in a package, the first antenna Ant1, the second antenna Ant2, the third antenna Ant3, and the fourth antenna Ant4 may alternately transmit the radio frequency signals without arranging multiple switches independently cascaded, the cost may be reduced, the area of the substrate occupied by various components in the radio frequency transceiver system may be reduced, and the 4 * 4 MIMO function may be supported.

Some embodiments of the present disclosure also provide a communication device, and the communication device includes the radio frequency transceiver system in any one of the aforesaid embodiments.

By arranging the radio frequency transceiver system on the communication device, the integration of the radio frequency transceiver system may be improved, and the area of the substrate occupied by each component in the radio frequency transceiver system may be reduced. In addition, the power supply and logic control of the first radio frequency LFEM component and the layout and wiring of the PCB may be simplified, and the cost may be saved.

Technical features of the aforesaid embodiments may be combined arbitrarily. To make the description concise, not all possible combinations of the technical features of the aforesaid embodiments have been described. However, the combinations of the technical features should be considered as the scope of the description as long as there is no contradiction.

The aforementioned embodiments only express several embodiments of the present disclosure, and the descriptions are specific and detailed. However, the aforementioned embodiments cannot be understood as limiting the scope of the present disclosure. It should be pointed out that, without departing from the concept of the present disclosure, those skilled in the art may also make some changes and improvements, which are within the protection scope of the present disclosure. Therefore, the protection scope of the present disclosure shall be subject to the appended claims.

## Claims

1. A radio frequency transceiver system, comprising:
a radio frequency transceiver (70), configured to support at least one of transmission and reception of a radio frequency signal;
an antenna group (10), at least comprising a first antenna (Ant1), a second antenna (Ant2), and a third antenna (Ant3), and configured to support at least one of transmission and reception of the radio frequency signal;
a first radio frequency Low Noise Amplifier-Front-End Module, LFEM, component (20), configured with a first antenna port (ANT1) configured to be connected to the first antenna (Ant1), a second antenna port (ANT2) configured to be connected to the second antenna (Ant2), and a plurality of first receiving ports (RXOUT) configured to be connected to the radio frequency transceiver (70), wherein the first radio frequency LFEM component (20) is configured to support dual channel reception of the radio frequency signal, a first receiving channel is formed between the first antenna port (ANT1) and one of the plurality of first receiving ports (RXOUT1), and a second receiving channel is formed between the second antenna port (ANT2) and another of the plurality of first receiving ports (RXOUT2); and
a second radio frequency LFEM component (40), configured with a third antenna port (ANT3) configured to be connected to the third antenna (Ant3) and a receiving port (RXOUT) configured to be connected to the radio frequency transceiver (70), wherein the second radio frequency LFEM component (40) is configured to support reception of the radio frequency signal;
**characterized in that** the first radio frequency LFEM component (20) is further configured with a first alternate transmitting port (SRS1) and a second alternate transmitting port (SRS2), and the radio frequency transceiver system further comprises:
a radio frequency Power Amplifier Modules including Duplexers, PA Mid, component (30), configured to support a transceiving control of the radio frequency signal;
a first switching unit (50), comprising two first ends and a second end, wherein one of the two first ends is connected to the third antenna port (ANT3) of the second radio frequency LFEM component (40), and the second end of the first switching unit (50) is connected to the third antenna (Ant3);
a multi-channel selecting switch (60), comprising a first end and a plurality of second ends, wherein the first end is connected to the radio frequency PA Mid component (30), and the plurality of second ends of the multi-channel selecting switch (60) are respectively connected to the first alternate transmitting port (SRS1), the second alternate transmitting port (SRS2), and the other of the two first ends of the first switching unit (50), and configured to selectively switch on a radio frequency channel between the radio frequency PA Mid component (30) and the first antenna (Ant1), a radio frequency channel between the radio frequency PA Mid component (30) and the second antenna (Ant2), a radio frequency channel between the radio frequency PA Mid component (30) and the third antenna (Ant3).

2. The radio frequency transceiver system as claimed in claim 1, wherein the antenna group (10) further comprises a fourth antenna (Ant4); and the plurality of second ends of the multi-channel selecting switch (60) are respectively connected to the fourth antenna (Ant4), the first alternate transmitting port (SRS1), the second alternate transmitting port (SRS2), and the other of the two first ends of the first switching unit (50) in one-to-one correspondence, and configured to selectively switch on the radio frequency channel between the radio frequency PA Mid component (30) and the first antenna (Ant1), the radio frequency channel between the radio frequency PA Mid component (30) and the second antenna (Ant2), the radio frequency channel between the radio frequency PA Mid component (30) and the third antenna (Ant3), and a radio frequency channel between the radio frequency PA Mid component (30) and the fourth antenna (Ant4).

3. The radio frequency transceiver system as claimed in claim 2, wherein the first radio frequency LFEM component (20) comprises:
a second switching unit (210), comprising a plurality of first ends and a plurality of second ends, wherein two of the plurality of first ends of the second switching unit (210) are respectively connected to the first alternate transmitting port (SRS1) and the second alternate transmitting port (SRS2) in one-to-one correspondence, and the plurality of second ends of the second switching unit (210) are respectively connected to the first antenna port (ANT1) and the second antenna port (ANT2) in one-to-one correspondence;
a first receiving circuit (211), comprising a first low noise amplifier (LNA1), wherein an input end of the first low noise amplifier (LNA1) is connected to another of the plurality of first ends of the second switching unit (210), an output end of the first low noise amplifier (LNA1) is connected to the one of the plurality of first receiving ports (RXOUT1), and the first low noise amplifier (LNA1) is configured to amplify the received radio frequency signal; and
a second receiving circuit (212), comprising a second low noise amplifier (LNA2), wherein an input end of the second low noise amplifier (LNA2) is connected to an additional one of the plurality of first ends of the second switching unit (210), an output end of the second low noise amplifier (LNA2) is connected to the another of the plurality of first receiving ports (RXOUT2), and the second low noise amplifier (LNA2) is configured to amplify the received radio frequency signal.

4. The radio frequency transceiver system as claimed in claim 3, wherein the first receiving circuit (211) further comprises:
a first filtering unit (220), respectively connected to the input end of the first low noise amplifier (LNA1) and the another of the plurality of first ends of the second switching unit (210), and configured to filter the received radio frequency signal and output the filtered radio frequency signal to the first low noise amplifier (LNA1); and
wherein the second receiving circuit (212) further comprises:
a second filtering unit (230), respectively connected to the input end of the second low noise amplifier (LNA2) and the additional one of the plurality of first ends of the second switching unit (210), and configured to filter the received radio frequency signal and output the filtered radio frequency signal to the second low noise amplifier (LNA2).

5. The radio frequency transceiver system as claimed in claim 3 or 4, wherein the first radio frequency LFEM component (20) further comprises:
a third filtering unit (250), respectively connected to the first alternate transmitting port (SRS1) and one of the two of the plurality of first ends of the second switching unit (210) and configured to filter the received radio frequency signal;
a fourth filtering unit (260), respectively connected to the second alternate transmitting port (SRS2) and the other of the two of the plurality of first ends of the second switching unit (210) and configured to filter the received radio frequency signal.

6. The radio frequency transceiver system as claimed in any one of claims 3-5, wherein the first radio frequency LFEM component (20) further comprises:
a fifth filtering unit (270), respectively connected to the first antenna port (ANT1) and one of the plurality of second ends of the second switching unit (210) and configured to filter the received radio frequency signal;
a sixth filtering unit (280), respectively connected to the second antenna port (ANT2) and another of the plurality of second ends of the second switching unit (210) and configured to filter the received radio frequency signal.

7. The radio frequency transceiver system as claimed in any one of claims 3-6, wherein the first radio frequency LFEM component (20) further comprises:
a control module (240), respectively connected to the first receiving circuit (211), the second receiving circuit (212), and the second switching unit (210), configured to adjust gain coefficients of the first low noise amplifier (LNA1) and the second low noise amplifier (LNA2) and reduce link loss of a receiving channel, and further configured to control the second switching unit (210) to selectively switch on any two channel of channels in which the first alternate transmitting port (SRS1), the second alternate transmitting port (SRS2), the first receiving circuit (211), and the second receiving circuit (212) are located.

8. The radio frequency transceiver system as claimed in claim 7, wherein the control module (240) comprises:
a first control unit (241), configured to control the second switching unit (210) to switch on a channel in which the first alternate transmitting port (SRS1) is located and a channel in which the first receiving circuit (211) is located; and
a second control unit (242), configured to control the second switching unit (210) to switch on a channel in which the second alternate transmitting port (SRS2) is located and a channel in which the second receiving circuit (212) is located.

9. The radio frequency transceiver system as claimed in any one of claims 2-8, wherein the radio frequency PA Mid component (30) is further configured with a radio frequency transmitting port (RFIN), a radio frequency receiving port (RXOUT), and a radio frequency antenna port (ANT);
the radio frequency transmitting port (RFIN) is configured to be connected to the radio frequency transceiver (70) and receive the radio frequency signal transmitted by the radio frequency transceiver (70);
the radio frequency receiving port (RXOUT) is configured to be connected to the radio frequency transceiver (70) and output the received radio frequency signal to the radio frequency transceiver (70); and
the radio frequency antenna port (ANT) is connected to the first end of the multi-channel selecting switch (60).

10. The radio frequency transceiver system as claimed in claim 9, wherein the radio frequency PA Mid component (30) comprises:
a power amplifier (301), an input end of the power amplifier (301) being connected to the radio frequency transmitting port (RFIN);
a ninth filtering unit (303), connected to the radio frequency antenna port (ANT) to filter the received radio frequency signal; and
a third switching unit (302), respectively connected to an output end of the power amplifier (301), the radio frequency receiving port (RXOUT), and the ninth filtering unit (303), and configured to selectively switch on a channel in which the radio frequency receiving port (RXOUT) is located and a channel in which the radio frequency transmitting port (RFIN) is located.

11. The radio frequency transceiver system as claimed in any one of claims 2-10, wherein the radio frequency transceiver system further comprises:
a seventh filtering unit (80), respectively connected to the one of the two first ends of the first switching unit (50) and the third antenna port (ANT3) to filter the received radio frequency signal.

12. The radio frequency transceiver system as claimed in any one of claims 2-11, wherein the second radio frequency LFEM component (40) comprises:
a third low noise amplifier (LNA3), wherein an input end of the third low noise amplifier (LNA3) is connected to the third antenna port (ANT3).

13. The radio frequency transceiver system as claimed in claim 12, wherein the second radio frequency LFEM component (40) further comprises:
an eighth filtering unit (802), respectively connected to an input end of the third low noise amplifier (LNA3) and the third antenna port (ANT3) and configured to filter the received radio frequency signal.

14. The radio frequency transceiver system as claimed in any one of claims 1-13, wherein the radio frequency signal is a 5G signal in any one of frequency bands N41, N77, and N79.

15. A communication device, comprising the radio frequency transceiver system as claimed in any one of claims 1-14.

## Patentansprüche

1. Funkfrequenzsendeempfänger-System, umfassend:
einen Funkfrequenzsendeempfänger (70), der dazu konfiguriert ist, mindestens eines von dem Senden oder dem Empfangen eines Funkfrequenzsignals zu unterstützen;
eine Antennengruppe (10), die mindestens eine erste Antenne (Ant1), eine zweite Antenne (Ant2) und eine dritte Antenne (Ant3) umfasst und dazu konfiguriert ist, um mindestens eines von dem Senden oder dem Empfangen des Funkfrequenzsignals zu unterstützen;
eine erste Funkfrequenz-Komponente mit rauscharmem Verstärker-Frontend-Modul (Low Noise Amplifier-Front-End Module, LFEM) (20), konfiguriert mit einem ersten Antennenanschluss (ANT1), der dazu konfiguriert ist, mit der ersten Antenne (Ant1) verbunden zu werden, einem zweiten Antennenanschluss (ANT2), der dazu konfiguriert ist, mit der zweiten Antenne (Ant2) verbunden zu werden, und einer Vielzahl von ersten Empfangsanschlüssen (RXOUT), die dazu konfiguriert sind, mit dem Funkfrequenzsendeempfänger (70) verbunden zu werden, wobei die erste Funkfrequenz-LFEM-Komponente (20) dazu konfiguriert ist, den Zweikanalempfang des Funkfrequenzsignals zu unterstützen, ein erster Empfangskanal zwischen dem ersten Antennenanschluss (ANT1) und einem der Vielzahl von ersten Empfangsanschlüssen (RXOUT1) gebildet wird und ein zweiter Empfangskanal zwischen dem zweiten Antennenanschluss (ANT2) und einem anderen der Vielzahl von ersten Empfangsanschlüssen (RXOUT2) gebildet wird; und
eine zweite Funkfrequenz-LFEM-Komponente (40), die mit einem dritten Antennenanschluss (ANT3) konfiguriert ist, der dazu konfiguriert ist, mit der dritten Antenne (Ant3) verbunden zu werden, und einem Empfangsanschluss (RXOUT), der dazu konfiguriert ist, mit dem Funkfrequenzsendeempfänger (70) verbunden zu werden, wobei die zweite Funkfrequenz-LFEM-Komponente (40) dazu konfiguriert ist, den Empfang des Funkfrequenzsignals zu unterstützen;
**dadurch gekennzeichnet, dass** die erste Funkfrequenz-LFEM-Komponente (20) ferner mit einem ersten alternativen Sendeanschluss (SRS1) und einem zweiten alternativen Sendeanschluss (SRS2) konfiguriert ist und das Funkfrequenzsendeempfänger-System ferner umfasst:
ein Funkfrequenz-Leistungsverstärkermodul, das eine Duplexer (PA-Mid)-Komponente (30) beinhaltet, die dazu konfiguriert ist, eine Sende-/Empfangssteuerung des Funkfrequenzsignals zu unterstützen;
eine erste Schalteinheit (50), die zwei erste Enden und ein zweites Ende umfasst, wobei eines der beiden ersten Enden mit dem dritten Antennenanschluss (ANT3) der zweiten Funkfrequenz-LFEM-Komponente (40) verbunden ist und das zweite Ende der ersten Schalteinheit (50) mit der dritten Antenne (Ant3) verbunden ist;
einen Mehrkanal-Auswahlschalter (60), der ein erstes Ende und eine Vielzahl von zweiten Enden umfasst, wobei das erste Ende mit der Funkfrequenz-PA-Mid-Komponente (30) verbunden ist und die Vielzahl von zweiten Enden des Mehrkanal-Auswahlschalters (60) jeweils mit dem ersten alternativen Sendeanschluss (SRS1), dem zweiten alternativen Sendeanschluss (SRS2) und dem anderen der zwei ersten Enden der ersten Schalteinheit (50) verbunden sind, und dazu konfiguriert ist, einen Funkfrequenzkanal zwischen der Funkfrequenz-PA-Mid-Komponente (30) und der ersten Antenne (Ant1), einen Funkfrequenzkanal zwischen der Funkfrequenz-PA-Mid-Komponente (30) und der zweiten Antenne (Ant2) oder einen Funkfrequenzkanal zwischen der Funkfrequenz-PA-Mid-Komponente (30) und der dritten Antenne (Ant3) selektiv einzuschalten.

2. Funkfrequenzsendeempfänger-System nach Anspruch 1, wobei die Antennengruppe (10) ferner eine vierte Antenne (Ant4) umfasst; und die Vielzahl von zweiten Enden des Mehrkanal-Auswahlschalters (60) jeweils in einer Eins-zu-eins-Entsprechung mit der vierten Antenne (Ant4), dem ersten alternativen Sendeanschluss (SRS1), dem zweiten alternativen Sendeanschluss (SRS2) und dem anderen der zwei ersten Enden der ersten Schalteinheit (50) verbunden sind, und dazu konfiguriert ist, den Funkfrequenzkanal zwischen der Funkfrequenz-PA-Mid-Komponente (30) und der ersten Antenne (Ant1), den Funkfrequenzkanal zwischen der Funkfrequenz-PA-Mid-Komponente (30) und der zweiten Antenne (Ant2), den Funkfrequenzkanal zwischen der Funkfrequenz-PA-Mid-Komponente (30) und der dritten Antenne (Ant3) und einen Funkfrequenzkanal zwischen der Funkfrequenz-PA-Mid-Komponente (30) und der vierten Antenne (Ant4) selektiv einzuschalten.

3. Funkfrequenzsendeempfänger-System nach Anspruch 2, wobei die erste Funkfrequenz-LFEM-Komponente (20) umfasst:
eine zweite Schalteinheit (210), die eine Vielzahl von ersten Enden und eine Vielzahl von zweiten Enden umfasst, wobei zwei der Vielzahl von ersten Enden der zweiten Schalteinheit (210) jeweils in einer Eins-zu-eins-Entsprechung mit dem ersten alternativen Sendeanschluss (SRS1) und dem zweiten alternativen Sendeanschluss (SRS2) verbunden sind und die Vielzahl von zweiten Enden der zweiten Schalteinheit (210) jeweils in einer Eins-zu-eins-Entsprechung mit dem ersten Antennenanschluss (ANT1) und dem zweiten Antennenanschluss (ANT2) verbunden sind;
eine erste Empfangsschaltung (211), die einen ersten rauscharmen Verstärker (Low Noise Amplifier, LNA1) umfasst, wobei ein Eingangsende des ersten rauscharmen Verstärkers (LNA1) mit einem anderen der Vielzahl von ersten Enden der zweiten Schalteinheit (210) verbunden ist, ein Ausgangsende des ersten rauscharmen Verstärkers (LNA1) mit einem der Vielzahl von ersten Empfangsanschlüssen (RXOUT1) verbunden ist und der erste rauscharme Verstärker (LNA1) dazu konfiguriert ist, das empfangene Funkfrequenzsignal zu verstärken; und
eine zweite Empfangsschaltung (212), die einen zweiten rauscharmen Verstärker (LNA2) umfasst, wobei ein Eingangsende des zweiten rauscharmen Verstärkers (LNA2) mit einem zusätzlichen der Vielzahl von ersten Enden der zweiten Schalteinheit (210) verbunden ist, ein Ausgangsende des zweiten rauscharmen Verstärkers (LNA2) mit einem der Vielzahl von ersten Empfangsanschlüssen (RXOUT2) verbunden ist und der zweite rauscharme Verstärker (LNA2) dazu konfiguriert ist, das empfangene Funkfrequenzsignal zu verstärken.

4. Funkfrequenzsendeempfänger-System nach Anspruch 3, wobei die erste Empfangsschaltung (211) ferner umfasst:
eine erste Filtereinheit (220), die jeweils mit dem Eingangsende des ersten rauscharmen Verstärkers (LNA1) und dem anderen der Vielzahl von ersten Enden der zweiten Schalteinheit (210) verbunden ist und dazu konfiguriert ist, das empfangene Funkfrequenzsignal zu filtern und das gefilterte Funkfrequenzsignal an den ersten rauscharmen Verstärker (LNA1) auszugeben; und
wobei die zweite Empfangsschaltung (212) ferner umfasst:
eine zweite Filtereinheit (230), die jeweils mit dem Eingangsende des zweiten rauscharmen Verstärkers (LNA2) und dem zusätzlichen der Vielzahl von ersten Enden der zweiten Schalteinheit (210) verbunden ist und dazu konfiguriert ist, das empfangene Funkfrequenzsignal zu filtern und das gefilterte Funkfrequenzsignal an den zweiten rauscharmen Verstärker (LNA2) auszugeben.

5. Funkfrequenzsendeempfänger-System nach Anspruch 3 oder 4, wobei die erste Funkfrequenz-LFEM-Komponente (20) ferner umfasst:
eine dritte Filtereinheit (250), die jeweils mit dem ersten alternativen Sendeanschluss (SRS1) und einem der beiden der Vielzahl von ersten Enden der zweiten Schalteinheit (210) verbunden ist und dazu konfiguriert ist, das empfangene Funkfrequenzsignal zu filtern;
eine vierte Filtereinheit (260), die jeweils mit dem zweiten alternativen Sendeanschluss (SRS2) und dem anderen der beiden der Vielzahl von ersten Enden der zweiten Schalteinheit (210) verbunden ist und dazu konfiguriert ist, das empfangene Funkfrequenzsignal zu filtern.

6. Funkfrequenzsendeempfänger-System nach einem der Ansprüche 3 bis 5, wobei die erste Funkfrequenz-LFEM-Komponente (20) ferner umfasst:
eine fünfte Filtereinheit (270), die jeweils mit dem ersten Antennenanschluss (ANT1) und einem der Vielzahl von zweiten Enden der zweiten Schalteinheit (210) verbunden ist und dazu konfiguriert ist, das empfangene Funkfrequenzsignal zu filtern;
eine sechste Filtereinheit (280), die jeweils mit dem zweiten Antennenanschluss (ANT2) und einem anderen der Vielzahl von zweiten Enden der zweiten Schalteinheit (210) verbunden ist und dazu konfiguriert ist, das empfangene Funkfrequenzsignal zu filtern.

7. Funkfrequenzsendeempfänger-System nach einem der Ansprüche 3 bis 6, wobei die erste Funkfrequenz-LFEM-Komponente (20) ferner umfasst:
ein Steuermodul (240), das jeweils mit der ersten Empfangsschaltung (211), der zweiten Empfangsschaltung (212) und der zweiten Schalteinheit (210) verbunden ist und dazu konfiguriert ist, Verstärkungskoeffizienten des ersten rauscharmen Verstärkers (LNA1) und des zweiten rauscharmen Verstärkers (LNA2) anzupassen und den Verbindungsverlust eines Empfangskanals zu verringern, und das ferner dazu konfiguriert ist, die zweite Schalteinheit (210) zu steuern, um zwei beliebige Kanäle von Kanälen selektiv einzuschalten, in denen sich der erste alternative Sendeanschluss (SRS1), der zweite alternative Sendeanschluss (SRS2), die erste Empfangsschaltung (211) und die zweite Empfangsschaltung (212) befinden.

8. Funkfrequenzsendeempfänger-System nach Anspruch 7, wobei das Steuermodul (240) umfasst:
eine erste Steuereinheit (241), die dazu konfiguriert ist, die zweite Schalteinheit (210) zu steuern, um einen Kanal, in dem sich der erste alternative Sendeanschluss (SRS1) befindet, und einen Kanal, in dem sich die erste Empfangsschaltung (211) befindet, einzuschalten; und
eine zweite Steuereinheit (242), die dazu konfiguriert ist, die zweite Schalteinheit (210) zu steuern, um einen Kanal, in dem sich der zweite alternative Sendeanschluss (SRS2) befindet, und einen Kanal, in dem sich die erste Empfangsschaltung (212) befindet, einzuschalten.

9. Funkfrequenzsendeempfänger-System nach einem der Ansprüche 2 bis 8, wobei die Funkfrequenz-PA-Mid-Komponente (30) ferner mit einem Funkfrequenz-Sendeanschluss (RFIN), einem Funkfrequenz-Empfangsanschluss (RXOUT) und einem Funkfrequenz-Antennenanschluss (ANT) konfiguriert ist;
der Funkfrequenz-Sendeanschluss (RFIN) dazu konfiguriert ist, mit dem Funkfrequenzsendeempfänger (70) verbunden zu werden und das vom Funkfrequenzsendeempfänger (70) gesendete Funkfrequenzsignal zu empfangen;
der Funkfrequenz-Empfangsanschluss (RXOUT) dazu konfiguriert ist, mit dem Funkfrequenzsendeempfänger (70) verbunden zu werden und das empfangene Funkfrequenzsignal an den Funkfrequenzsendeempfänger (70) auszugeben; und
der Funkfrequenz-Antennenanschluss (ANT) mit dem ersten Ende des Mehrkanal-Auswahlschalters (60) verbunden ist.

10. Funkfrequenzsendeempfänger-System nach Anspruch 9, wobei die Funkfrequenz-PA-Mid-Komponente (30) umfasst:
einen Leistungsverstärker (301), wobei ein Eingangsende des Leistungsverstärkers (301) mit dem Funkfrequenz-Sendeanschluss (RFIN) verbunden ist;
eine neunte Filtereinheit (303), die mit dem Funkfrequenz-Antennenanschluss (ANT) verbunden ist, um das empfangene Funkfrequenzsignal zu filtern; und
eine dritte Schalteinheit (302), die jeweils mit einem Ausgangsende des Leistungsverstärkers (301), dem Funkfrequenz-Empfangsanschluss (RXOUT) und der neunten Filtereinheit (303) verbunden ist und dazu konfiguriert ist, einen Kanal, in dem sich der Funkfrequenz-Empfangsanschluss (RXOUT) befindet, und einen Kanal, in dem sich der Funkfrequenz-Sendeanschluss (RFIN) befindet, selektiv einzuschalten.

11. Funkfrequenzsendeempfänger-System nach einem der Ansprüche 2 bis 10, wobei das Funkfrequenzsendeempfänger-System ferner umfasst:
eine siebte Filtereinheit (80), die jeweils mit einem der beiden ersten Enden der ersten Schalteinheit (50) und dem dritten Antennenanschluss (ANT3) verbunden ist, um das empfangene Funkfrequenzsignal zu filtern.

12. Funkfrequenzsendeempfänger-System nach einem der Ansprüche 2 bis 11, wobei die zweite Funkfrequenz-LFEM-Komponente (40) umfasst:
einen dritten rauscharmen Verstärker (LNA3), wobei ein Eingangsende des dritten rauscharmen Verstärkers (LNA3) mit dem dritten Antennenanschluss (ANT3) verbunden ist.

13. Funkfrequenzsendeempfänger-System nach Anspruch 12, wobei die zweite Funkfrequenz-LFEM-Komponente (40) ferner umfasst:
eine achte Filtereinheit (802), die jeweils mit einem Eingangsende des dritten rauscharmen Verstärkers (LNA3) und dem dritten Antennenanschluss (ANT3) verbunden ist und dazu konfiguriert ist, das empfangene Funkfrequenzsignals zu filtern.

14. Funkfrequenzsendeempfänger-System nach einem der Ansprüche 1 bis 13, wobei das Funkfrequenzsignal ein 5G-Signal in einem der Frequenzbänder N41, N77 und N79 ist.

15. Kommunikationsvorrichtung, die das Funkfrequenzsendeempfänger-System nach einem der Ansprüche 1 bis 14 umfasst.

## Revendications

1. Système émetteur-récepteur radiofréquence, comprenant :
un émetteur-récepteur radiofréquence (70), configuré pour prendre en charge l'émission et/ou la réception d'un signal radiofréquence ;
un groupe d'antennes (10), comprenant au moins une première antenne (Ant1), une deuxième antenne (Ant2), et une troisième antenne (Ant3), et configuré pour prendre en charge l'émission et/ou la réception du signal radiofréquence ;
un premier composant de module frontal amplificateur à faible bruit, LFEM, radiofréquence (20) configuré avec un premier port d'antenne (ANT1) configuré pour être connecté à la première antenne (Ant1), un deuxième port d'antenne (ANT2) configuré pour être connecté à la deuxième antenne (Ant2), et une pluralité de premiers ports de réception (RXOUT) configurés pour être connectés à l'émetteur-récepteur radiofréquence (70), dans lequel le premier composant LFEM radiofréquence (20) est configuré pour prendre en charge la réception à double canal du signal radiofréquence, un premier canal de réception est formé entre le premier port d'antenne (ANT1) et l'un de la pluralité de premiers ports de réception (RXOUT1), et un second canal de réception est formé entre le deuxième port d'antenne (ANT2) et un autre de la pluralité de premiers ports de réception (RXOUT2) ; et
un second composant LFEM radiofréquence (40), configuré avec un troisième port d'antenne (ANT3) configuré pour être connecté à la troisième antenne (Ant3) et un port de réception (RXOUT) configuré pour être connecté à l'émetteur-récepteur radiofréquence (70), dans lequel le second composant LFEM radiofréquence (40) est configuré pour prendre en charge la réception du signal radiofréquence ;
**caractérisé en ce que** le premier composant LFEM radiofréquence (20) est en outre configuré avec un premier port d'émission alternatif (SRS1) et un second port d'émission alternatif (SRS2), et le système émetteur-récepteur radiofréquence comprend en outre :
un composant de modules amplificateurs de puissance incluant des duplexeurs, PA Mid, radiofréquence (30), configuré pour prendre en charge une commande d'émission-réception du signal radiofréquence ;
une première unité de commutation (50), comprenant deux premières extrémités et une seconde extrémité, dans lequel l'une des deux premières extrémités est connectée au troisième port d'antenne (ANT3) du second composant LFEM radiofréquence (40), et la seconde extrémité de la première unité de commutation (50) est connectée à la troisième antenne (Ant3) ;
un commutateur de sélection multicanal (60), comprenant une première extrémité et une pluralité de secondes extrémités, dans lequel la première extrémité est connectée au composant PA Mid radiofréquence (30), et la pluralité de secondes extrémités du commutateur de sélection multicanal (60) sont respectivement connectées au premier port d'émission alternatif (SRS1), au second port d'émission alternatif (SRS2), et à l'autre des deux premières extrémités de la première unité de commutation (50), et configuré pour activer sélectivement un canal radiofréquence entre le composant PA Mid radiofréquence (30) et la première antenne (Ant1), un canal radiofréquence entre le composant PA Mid radiofréquence (30) et la deuxième antenne (Ant2), et un canal radiofréquence entre le composant PA Mid radiofréquence (30) et la troisième antenne (Ant3).

2. Système émetteur-récepteur radiofréquence selon la revendication 1, dans lequel le groupe d'antennes (10) comprend en outre une quatrième antenne (Ant4) ; et la pluralité de secondes extrémités du commutateur de sélection multicanal (60) sont respectivement connectées à la quatrième antenne (Ant4), au premier port d'émission alternatif (SRS1), au second port d'émission alternatif (SRS2), et à l'autre des deux premières extrémités de la première unité de commutation (50) dans une correspondance biunivoque, et configurées pour activer sélectivement le canal radiofréquence entre le composant PA Mid radiofréquence (30) et la première antenne (Ant1), le canal radiofréquence entre le composant PA Mid radiofréquence (30) et la deuxième antenne (Ant2), le canal radiofréquence entre le composant PA Mid radiofréquence (30) et la troisième antenne (Ant3), et un canal radiofréquence entre le composant PA Mid radiofréquence (30) et la quatrième antenne (Ant4).

3. Système émetteur-récepteur radiofréquence selon la revendication 2, dans lequel le premier composant LFEM radiofréquence (20) comprend :
une deuxième unité de commutation (210), comprenant une pluralité de premières extrémités et une pluralité de secondes extrémités, dans lequel deux de la pluralité de premières extrémités de la deuxième unité de commutation (210) sont respectivement connectées au premier port d'émission alternatif (SRS1) et au second port d'émission alternatif (SRS2) dans une correspondance biunivoque, et la pluralité de secondes extrémités de la deuxième unité de commutation (210) sont respectivement connectées au premier port d'antenne (ANT1) et au deuxième port d'antenne (ANT2) dans une correspondance biunivoque ;
un premier circuit de réception (211), comprenant un premier amplificateur à faible bruit (LNA1), dans lequel une extrémité d'entrée du premier amplificateur à faible bruit (LNA1) est connectée à une autre de la pluralité de premières extrémités de la deuxième unité de commutation (210), une extrémité de sortie du premier amplificateur à faible bruit (LNA1) est connectée à l'un de la pluralité de premiers ports de réception (RXOUT1), et le premier amplificateur à faible bruit (LNA1) est configuré pour amplifier le signal radiofréquence reçu ; et
un second circuit de réception (212), comprenant un deuxième amplificateur à faible bruit (LNA2), dans lequel une extrémité d'entrée du deuxième amplificateur à faible bruit (LNA2) est connectée à une extrémité supplémentaire de la pluralité de premières extrémités de la deuxième unité de commutation (210), une extrémité de sortie du deuxième amplificateur à faible bruit (LNA2) est connectée audit autre de la pluralité de premiers ports de réception (RXOUT2), et le deuxième amplificateur à faible bruit (LNA2) est configuré pour amplifier le signal radiofréquence reçu.

4. Système émetteur-récepteur radiofréquence selon la revendication 3, dans lequel le premier circuit de réception (211) comprend en outre :
une première unité de filtrage (220), respectivement connectée à l'extrémité d'entrée du premier amplificateur à faible bruit (LNA1) et à ladite autre de la pluralité de premières extrémités de la deuxième unité de commutation (210), et configurée pour filtrer le signal radiofréquence reçu et fournir en sortie le signal radiofréquence filtré au premier amplificateur à faible bruit (LNA1) ; et
dans lequel le second circuit de réception (212) comprend en outre :
une deuxième unité de filtrage (230), respectivement connectée à l'extrémité d'entrée du deuxième amplificateur à faible bruit (LNA2) et à l'extrémité supplémentaire de la pluralité de premières extrémités de la deuxième unité de commutation (210), et configurée pour filtrer le signal radiofréquence reçu et fournir en sortie le signal radiofréquence filtré au deuxième amplificateur à faible bruit (LNA2).

5. Système émetteur-récepteur radiofréquence selon la revendication 3 ou 4, dans lequel le premier composant LFEM radiofréquence (20) comprend en outre :
une troisième unité de filtrage (250), respectivement connectée au premier port d'émission alternatif (SRS1) et à l'une des deux de la pluralité de premières extrémités de la deuxième unité de commutation (210) et configurée pour filtrer le signal radiofréquence reçu ; une quatrième unité de filtrage (260), respectivement connectée au second port d'émission alternatif (SRS2) et à l'autre des deux de la pluralité de premières extrémités de la deuxième unité de commutation (210) et configurée pour filtrer le signal radiofréquence reçu.

6. Système émetteur-récepteur radiofréquence selon l'une quelconque des revendications 3 à 5, dans lequel le premier composant LFEM radiofréquence (20) comprend en outre :
une cinquième unité de filtrage (270), respectivement connectée au premier port d'antenne (ANT1) et à l'une de la pluralité de secondes extrémités de la deuxième unité de commutation (210) et configurée pour filtrer le signal radiofréquence reçu ;
une sixième unité de filtrage (280), respectivement connectée au deuxième port d'antenne (ANT2) et à une autre de la pluralité de secondes extrémités de la deuxième unité de commutation (210) et configurée pour filtrer le signal radiofréquence reçu.

7. Système émetteur-récepteur radiofréquence selon l'une quelconque des revendications 3 à 6, dans lequel le premier composant LFEM radiofréquence (20) comprend en outre :
un module de commande (240), respectivement connecté au premier circuit de réception (211), au second circuit de réception (212), et à la deuxième unité de commutation (210), configuré pour ajuster des coefficients de gain du premier amplificateur à faible bruit (LNA1) et du second amplificateur à faible bruit (LNA2) et réduire la perte de liaison d'un canal de réception, et est en outre configuré pour commander la deuxième unité de commutation (210) pour activer sélectivement deux canaux quelconques parmi les canaux dans lesquels le premier port d'émission alternatif (SRS1), le second port d'émission alternatif (SRS2), le premier circuit de réception (211), et le second circuit de réception (212) sont situés.

8. Système émetteur-récepteur radiofréquence selon la revendication 7, dans lequel le module de commande (240) comprend :
une première unité de commande (241), configurée pour commander la deuxième unité de commutation (210) pour activer un canal dans lequel le premier port d'émission alternatif (SRS1) est situé et un canal dans lequel le premier circuit de réception (211) est situé ; et
une seconde unité de commande (242), configurée pour commander la deuxième unité de commutation (210) pour activer un canal dans lequel le second port d'émission alternatif (SRS2) est situé et un canal dans lequel le second circuit de réception (212) est situé.

9. Système émetteur-récepteur radiofréquence selon l'une quelconque des revendications 2 à 8, dans lequel le composant PA Mid radiofréquence (30) est en outre configuré avec un port d'émission radiofréquence (RFIN), un port de réception radiofréquence (RXOUT), et un port d'antenne radiofréquence (ANT) ;
le port d'émission radiofréquence (RFIN) est configuré pour être connecté à l'émetteur-récepteur radiofréquence (70) et recevoir le signal radiofréquence émis par l'émetteur-récepteur radiofréquence (70) ;
le port de réception radiofréquence (RXOUT) est configuré pour être connecté à l'émetteur-récepteur radiofréquence (70) et fournir en sortie le signal radiofréquence reçu à l'émetteur-récepteur radiofréquence (70) ; et
le port d'antenne radiofréquence (ANT) est connecté à la première extrémité du commutateur de sélection multicanal (60).

10. Système émetteur-récepteur radiofréquence selon la revendication 9, dans lequel le composant PA Mid radiofréquence (30) comprend :
un amplificateur de puissance (301), une extrémité d'entrée de l'amplificateur de puissance (301) étant connectée au port d'émission radiofréquence (RFIN) ;
une neuvième unité de filtrage (303), connectée au port d'antenne radiofréquence (ANT) pour filtrer le signal radiofréquence reçu ; et
une troisième unité de commutation (302), respectivement connectée à une extrémité de sortie de l'amplificateur de puissance (301), au port de réception radiofréquence (RXOUT), et à la neuvième unité de filtrage (303), et configurée pour activer sélectivement un canal dans lequel le port de réception de radiofréquence (RXOUT) est situé et un canal dans lequel le port d'émission de radiofréquence (RFIN) est situé.

11. Système émetteur-récepteur radiofréquence selon l'une quelconque des revendications 2 à 10, dans lequel le système émetteur-récepteur radiofréquence comprend en outre :
une septième unité de filtrage (80), respectivement connectée à l'une des deux premières extrémités de la première unité de commutation (50) et au troisième port d'antenne (ANT3) pour filtrer le signal radiofréquence reçu.

12. Système émetteur-récepteur radiofréquence selon l'une quelconque des revendications 2 à 11, dans lequel le second composant LFEM radiofréquence (40) comprend :
un troisième amplificateur à faible bruit (LNA3), dans lequel une extrémité d'entrée du troisième amplificateur à faible bruit (LNA3) est connectée au troisième port d'antenne (ANT3).

13. Système émetteur-récepteur radiofréquence selon la revendication 12, dans lequel le second composant LFEM radiofréquence (40) comprend en outre :
une huitième unité de filtrage (802), respectivement connectée à une extrémité d'entrée du troisième amplificateur à faible bruit (LNA3) et au troisième port d'antenne (ANT3) et configurée pour filtrer le signal radiofréquence reçu.

14. Système émetteur-récepteur radiofréquence selon l'une quelconque des revendications 1 à 13, dans lequel le signal radiofréquence est un signal 5G dans l'une quelconque des bandes de fréquences N41, N77 et N79.

15. Dispositif de communication, comprenant le système émetteur-récepteur radiofréquence selon l'une quelconque des revendications 1 à 14.
